(19) Europäisches Patentamt
European Patent Office
Office européen des brevets

(11) **EP 3 366 468 B1**

(12) **EUROPÄISCHE PATENTSCHRIFT**

(45) Veröffentlichungstag und Bekanntmachung des Hinweises auf die Patenterteilung:
**06.04.2022  Patentblatt 2022/14**

(21) Anmeldenummer: **17158247.1**

(22) Anmeldetag: **27.02.2017**

(51) Internationale Patentklassifikation (IPC):
*B32B 21/02* (2006.01)     *B32B 21/13* (2006.01)
*B32B 21/14* (2006.01)     *C08G 12/12* (2006.01)
*B27N 3/00* (2006.01)      *C08G 12/14* (2006.01)
*C08G 12/20* (2006.01)     *C08G 14/10* (2006.01)
*C08G 8/04* (2006.01)      *C08L 61/06* (2006.01)
*C08L 61/24* (2006.01)     *C08L 61/28* (2006.01)
*C08L 97/02* (2006.01)     *C09J 161/12* (2006.01)
*C09J 161/06* (2006.01)    *C09J 161/28* (2006.01)
*C09J 161/34* (2006.01)    *C08G 12/32* (2006.01)
*C08G 14/08* (2006.01)

(52) Gemeinsame Patentklassifikation (CPC):
**C08G 12/12; B27N 3/002; B32B 21/02;
B32B 21/13; B32B 21/14; C08G 8/04; C08G 12/14;
C08G 12/20; C08G 12/32; C08G 14/08;
C08G 14/10; C08L 61/06; C08L 61/24; C08L 61/28;
C08L 97/02;**                                    (Forts.)

(54) **VERFAHREN ZUR HERSTELLUNG THERMISCH HÄRTBARER HARZE SOWIE DURCH DAS VERFAHREN ERHÄLTLICHE HARZE**

METHOD FOR PRODUCING THERMALLY CURABLE RESIN AND RESIN OBTAINABLE BY THE METHOD

PROCÉDÉ DE FABRICATION DE RÉSINE THERMODURCISSABLE ET RÉSINE OBTENUE SELON LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.08.2018  Patentblatt 2018/35**

(73) Patentinhaber: **AVA Biochem AG**
**6300 Zug (CH)**

(72) Erfinder:
• **BADOUX, François**
  **6314 Unterägeri (CH)**
• **KRAWIELITZKI, Stefan**
  **6343 Holzhäusern (CH)**
• **MORTATO, Mariangela**
  **4051 Basel Stadt (CH)**
• **LAGEL, Marie-Christine**
  **67670 Mommenheim (CH)**
• **HOLMES, Christopher**
  **4208 Nunningen (CH)**
• **FREI, Reto**
  **2533 Evilard (CH)**

(74) Vertreter: **Christ, Niko**
**Geitz Truckenmüller Lucht Christ**
**Patentanwälte PartGmbB**
**Obere Wässere 3-7**
**72764 Reutlingen (DE)**

(56) Entgegenhaltungen:
**US-A- 2 776 948          US-A- 4 524 164
US-A1- 2013 345 450**

(52) Gemeinsame Patentklassifikation (CPC): (Forts.)
**C09J 161/06; C09J 161/12; C09J 161/28; C09J 161/34;** B32B 2260/026; B32B 2260/046; B32B 2307/50; B32B 2307/712; B32B 2307/732

**Beschreibung**

Die vorliegende Erfindung betrifft ein Verfahren zur Herstellung von thermisch härtbaren Harzen. Im Besonderen betrifft die Erfindung ein Verfahren zur Herstellung von thermisch härtbaren Harzen enthaltend den Schritt der Umsetzung eines Aminoplastbildners mit 5-Hydroxymethylfurfural (HMF) unter zur Bildung von Polykondensationsprodukten führenden Bedingungen, dadurch gekennzeichnet, dass das HMF mindestens ein HMF-Oligomer umfasst und dass der Anteil an HMF-Oligomer 0,05 Gew. % bis zu 100 Gew.% beträgt, bezogen auf die Gesamtmenge an eingesetztem HMF.

Thermisch härtbare Harze werden vorzugsweise durch die Polykondensation von phenolischen Verbindungen und/oder Aminoplastbildnern mit reaktiven Carbonylverbindungen, insbesondere Aldehyden, gewonnen. Beispielhaft seien Aminoharze mit den Aminoplastbildnern Harnstoff, Melamin und Dicyandiamid, Phenol-Harze oder AminoPhenol-Harze genannt. Die Harze zeichnen sich im Allgemeinen durch gute Verarbeitungseigenschaften wie eine hohe Reaktivität aus. Durch anschließende Aushärtung der Harze erhält man einen duroplastischen Werkstoff.

Zur Herstellung von Holzverbundwerkstoffen werden die Harze üblicherweise mit zerkleinertem Holz, beispielsweise mit Holzspänen oder Holzfasern vermischt, wonach man sie bei erhöhten Temperaturen verpresst, wobei die Harze unter Vernetzung aushärten.

Aufgrund seiner hohen Reaktivität kommt für die Polykondensation vorwiegend Formaldehyd zum Einsatz. Zur Förderung der Umsetzung wird häufig mit einem Überschuss an Formaldehyd gearbeitet, sodass die Harze einen hohen Gehalt an freiem Formaldehyd aufweisen. Die Formaldehydemission der Harze ist daher hoch. Nachteilig dabei ist die von Formaldehyd ausgehende Gesundheitsgefährdung, sodass die Verwendung von Formaldehyd auch zunehmend reguliert wird.

Aufgrund des Gefährdungspotenzials ist man seit Jahren darum bemüht, den Gehalt an Formaldehyd zu reduzieren. Eine Maßnahme hierbei ist, Formaldehyd bei der Herstellung der Harze durch andere reaktive Verbindungen zu ersetzen. 5-Hydroxymethylfurfural (HMF) wurde bereits als ein vielversprechender Kandidat hierfür identifiziert, da dieses eine Fähigkeit besitzt, quervernetzende Bindungen auszubilden, schwer-flüchtig sowie praktisch ungiftig ist und aus erneuerbaren Rohstoffen gewonnen werden kann.

In der Fachzeitschrift European Journal of Wood Products wird ein HMF-modifiziertes Harnstoff-Formaldehyd-Harz beschrieben, bei dessen Herstellung bis zu etwa 30 Gew.% des Formaldehyds durch gereinigtes, kristallines HMF ersetzt wurden (N. Esmaeili et al., DOI 10.1007/s0017-016-1072-8). Mit diesem Harz hergestellte Spanplatten zeigen eine innere Bindung (IB) von $\geq$ 0,35 N/mm$^2$, wie sie zur Erfüllung des Mindeststandards für Platten in Innenräumen gemäß der europäischen Norm NEN EN 319 derzeit benötigt werden. Nachteilig ist jedoch, dass das Harz und daraus hergestellte Spanplatten noch erhebliche Mengen an toxischem Formaldehyd enthalten. Die Druckschrift US4524164 A beschreibt ein Verfahren zur Herstellung von formaldehydfreien thermisch härtbaren Harzen, welche sich zur Bindung von lignocellulosehaltigem Material für die Produktion von Sperrholz- und Spanplatten eignen. Das schmelzbare Harz wird hergestellt, indem eine wässrige Zucker- oder Stärkelösung in Gegenwart eines Vernetzungsmittels, welches ausgewählt ist aus Harnstoff oder Phenol oder Mischungen aus diesen, mit einer anorganischen Säure oder ihrem Ammoniumsalz und einem Metallionen-Katalysator erhitzt wird.

Die Aufgabe der vorliegenden Erfindung besteht demnach in der Beseitigung der oben genannten Nachteile.

Dies gelingt nach einem ersten Aspekt der vorliegenden Erfindung durch ein Verfahren zur Herstellung thermisch härtbarer Harze gemäß den Merkmalen des Anspruchs 1. Das Verfahren zur Herstellung von thermisch härtbaren Harzen enthält den Schritt der

Umsetzung Aminoplastbildners mit 5-Hydroxymethylfurfural (HMF) unter zur Bildung von Polykondensationsprodukten führenden Bedingungen und ist dadurch gekennzeichnet, dass das HMF mindestens ein HMF-Oligomer umfasst und dass der Anteil an HMF-Oligomer 0,05 Gew.% bis zu 100 Gew.% beträgt, bezogen auf die Gesamtmenge an eingesetztem HMF.

Es wurde gefunden, dass auf Formaldehyd vollkommen verzichtet werden kann, sofern für die Polykondensation HMF eingesetzt wird, das HMF-Oligomere enthält. Es wird angenommen, dass die HMF-Oligomere reaktiver sind als HMF-Monomere, was ein Verfahren zur Herstellung von thermisch härtbaren Harzen ohne den Einsatz von Formaldehyd ermöglicht.

Das Auftreten von wasserlöslichen linearen und verzweigten HMF-Oligomeren in Lösungen von HMF ist beispielsweise aus der DE 10 2014 112 240 A1 bekannt. Die Bildung der HMF-Oligomere kann beispielsweise mittels HPLC-Analysen verfolgt werden. Als HMF-Oligomere im Sinne der vorliegenden Erfindung werden im Unterschied zu HMF-Monomeren Verbindungen aus mindestens zwei verknüpften HMF-Einheiten/Monomeren bezeichnet. Üblicherweise versteht man unter HMF-Oligomeren Verbindungen mit einem Molekulargewicht von bis zu 3000 g/mol. Für das Verfahren eignen sich insbesondere HMF-Oligomere mit einem niedrigen Molekulargewicht, die unter den gewählten Umsetzungsbedingungen in dem gewählten Lösungsmittel löslich oder zumindest dispergiert vorliegen. Der Übergang zwischen gelöster und dispergierter Form kann hierbei fließend sein, sodass in der vorliegenden Erfindung diesbezüglich nicht unterschieden werden soll.

Die Polykondensation nimmt man in an sich bekannter Weise vor. Für die Umsetzung geeignete Lösungsmittel sowie geeignete Reaktionsbedingungen wie beispielsweise Reaktionstemperatur und pH-Wert sind dem Fachmann grundsätzlich bekannt. Bevorzugt wird die Umsetzung in einem wässrigen Lösungsmittel durchgeführt.

Für den Fachmann ist es dabei selbstverständlich, dass das mindestens eine HMF-Oligomer in einer Mischung aus HMF-Oligomeren verschiedener Länge und/oder verschiedenen Vernetzungsgrads vorliegen kann. Es ist zudem möglich, durch die Auswahl eines HMF-Oligomers oder durch die Auswahl einer Kombination unterschiedlicher HMF-Oligomere, die Eigenschaften des resultierenden Harzes gezielt auf den technischen Verwendungszweck abzustimmen.

Nach einer vorteilhaften Ausgestaltung des Verfahrens wird der Umsetzungsschritt bei Temperaturen im Bereich von 40°C bis 140°C, bevorzugt im Bereich von 50 bis 140°C, weiter bevorzugt im Bereich von 60°C bis 100°C, besonders bevorzugt im Bereich von 80°C bis 100°C durchgeführt. Prinzipiell kann die Temperatur zur Durchführung des Verfahrens in einem breiten Bereich variiert werden. Es wurde jedoch beobachtet, dass durch die Umsetzung bei höheren Temperaturen reaktivere Harze gewonnen werden können. Besonders hoch reaktive Harze, welche bei einer anschließenden Werkstoffherstellung geringe Presszeiten zum Aushärten benötigen, können bei Temperaturen im Bereich von 80°C bis 100°C gewonnen werden. Dies war unerwartet, da man bislang davon ausging, dass bereits ab Temperaturen über 50°C eine zunehmende Zersetzung von HMF stattfindet.

Nach einer weiteren vorteilhaften Ausgestaltung des Verfahrens beträgt das molare Verhältnis der eingesetzten HMF-Menge zu der Gesamtmenge an phenolischer Verbindung und/oder Aminoplastbildner 0,20:1 bis 3:1, bevorzugt beträgt das molare Verhältnis 0,3:1 bis 1:1, besonders bevorzugt beträgt das molare Verhältnis 0,45:1 bis 0,70:1. Prinzipiell kann das molare Verhältnis der eingesetzten HMF-Menge zu der Gesamtmenge an phenolischer Verbindung und/oder Aminoplastbildner über einen breiten Bereich variiert werden. Auch ein molarer Überschuss von HMF kann vorteilhaft sein. Ein für die jeweilige phenolische Verbindung, den jeweiligen Aminoplastbildner oder auf ein Gemisch aus phenolischer Verbindung und Aminoplastbildner geeignetes molares Verhältnis lässt sich für den Fachmann leicht ermitteln.

Nach einer weiteren vorteilhaften Ausgestaltung des Verfahrens beträgt der Anteil an HMF-Oligomer 0,05 Gew.% bis 10 Gew.%, bezogen auf die Gesamtmenge an eingesetztem HMF, bevorzugt beträgt der Anteil an HMF-Oligomer 0,1 Gew.% bis 8 Gew.%, bezogen auf die Gesamtmenge an eingesetztem HMF, besonders bevorzugt beträgt der Anteil an HMF-Oligomer 2 Gew.% bis 4 Gew.%, bezogen auf die Gesamtmenge an eingesetztem HMF. Aufgrund der hohen Reaktivität reichen bereits geringe Mengen an HMF-Oligomer aus, um reaktive Harze bereitzustellen. Es ist für den Fachmann selbstverständlich, dass auch höhere Anteile an HMF-Oligomer eingesetzt werden können. Ebenfalls von der Erfindung umfasst ist, dass das HMF-Oligomer bis zu 100 Gew.%, bezogen auf die Gesamtmenge an eingesetztem HMF, ausmacht.

Nach einer weiteren vorteilhaften Ausgestaltung des Verfahrens weist das HMF-Oligomer 2 bis 20 Einheiten auf, bevorzugt 2 bis 10 Einheiten, besonders bevorzugt 2 bis 4 Einheiten. HMF-Oligomere mit 2 bis 10 Einheiten sind unter moderaten Bedingungen, das heißt bei Raumtemperatur und unter Normaldruck, gut wasserlöslich, sodass die HMF-Oligomere problemlos für eine Polykondensation in einem wässrigen Medium eingesetzt werden können. HMF-Oligomere mit 2 bis 4 Einheiten weisen eine verbesserte Wasserlöslichkeit auf. HMF-Oligomere mit 2 Einheiten sind besonders gut wasserlöslich.

Bei dem Aminoplastbildner kann es sich um solche handeln, die üblicherweise für die Herstellung von thermisch härtbaren Harzen verwendet werden.

Vorteilhafterweise ist der Aminoplastbildner Harnstoff, Melamin, substituiertes Melamin, substituierter Harnstoff, Acetylendiharnstoff, Guanidin, Thioharnstoff, Thioharnstoffderivat, Diaminoalkan, Diamidoalkan oder ein Gemisch von mindestens zwei dieser Aminoplastbildner.

Dabei können neben den genannten Komponenten auch noch weitere phenolische Verbindungen und/oder Aminoplastbildner vorhanden sein.

In Abhängigkeit von dem Aminoplastbildner kann der pH-Wert über einen breiten Bereich variieren. Der pH-Wert kann beispielsweise im Bereich von 6 bis 10, bevorzugt im Bereich von 7 bis 8,5 liegen.

Nach einer weiteren bevorzugten Ausgestaltung des Verfahrens ist das für die Polykondensation eingesetzte HMF-Oligomer ein kohlenstoffverknüpftes HMF-Oligomer. HMF-Oligomere werden im Sinne der vorliegenden Erfindung als kohlenstoffverknüpfte HMF-Oligomere bezeichnet, sofern zumindest zwei HMF-Einheiten über eine Kohlenstoff-Kohlenstoff-Bindung unter Einbeziehung eines aromatisch gebundenen Kohlenstoffatoms an Position 3 oder 4 des Furanrings einer der beiden HMF-Einheiten verknüpft sind. Insbesondere enthält das kohlenstoffverknüpfte HMF-Oligomer zumindest eine erste Einheit, deren Aldehydgruppen-Kohlenstoffatom mit einem aromatisch gebundenen Kohlenstoffatom des Furanrings einer zweiten Einheit verknüpft ist.

Die Erfinder haben herausgefunden, dass sich neben HMF-Oligomeren, die aus der Verknüpfung von Aldehyd- und/oder Hydroxylgruppen der HMF-Einheiten resultieren und die die entsprechenden Ether-, Hemiacetal- und/oder Acetal-Bindungen aufweisen, sowohl unter sauren als auch unter basischen Bedingungen HMF-Oligomere bilden, bei denen Einheiten über eine Kohlenstoff-Kohlenstoff-Bindung verknüpft sind. Diese Bindungen können beispielsweise bei einem elektrophilen Angriff einer Aldehydgruppe eines ersten HMF-Monomers oder einer HMF-Einheit eines HMF-Oligomers auf das Kohlenstoffatom in Position 3 oder 4 eines Furanrings eines zweiten HMF-Monomers oder einer HMF-Einheit eines HMF-Oligomers entstehen.

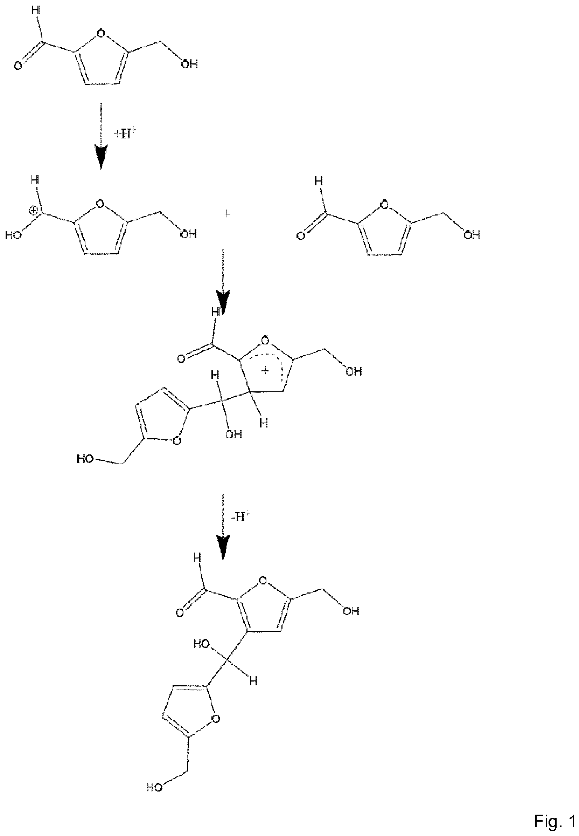

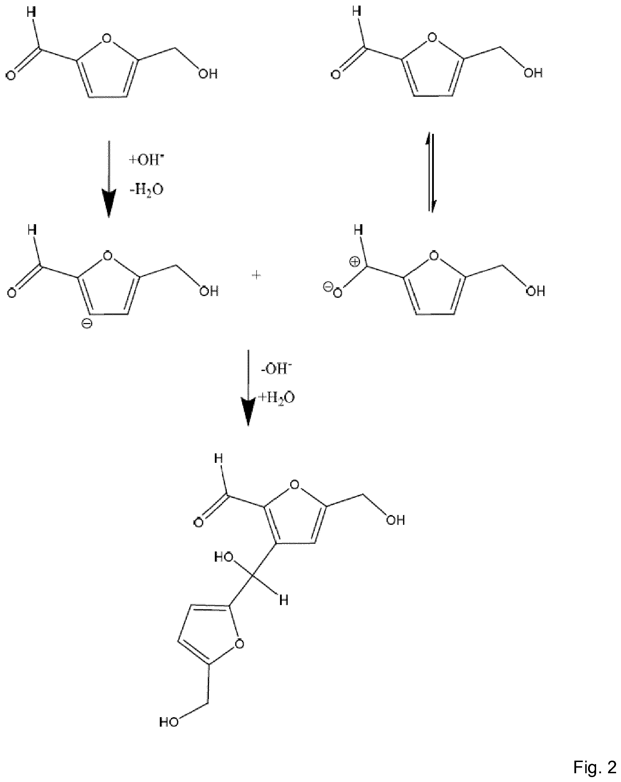

Die für die HMF-Oligomerbildung im Sauren und im Basischen vorgeschlagenen Mechanismen können den Figuren 1 und 2 entnommen werden. Aus diesen wird unter anderem ersichtlich, dass HMF-Oligomere, die über eine Verknüpfung durch eine Kohlenstoff-Kohlenstoff-Bindung verfügen, gleichzeitig auch über mehr freie funktionelle Aldehyd- und/oder Hydroxyl-Gruppen verfügen als HMF-Oligomere, bei denen die Verbindung lediglich über Aldehyd- und/Hydroxylgruppen des HMFs zustande kommt. Hierdurch ergeben sich sehr reaktive HMF-Oligomere, die über zusätzliche Vernetzungsmöglichkeiten verfügen.

In dem kohlenstoffverknüpften HMF-Oligomer können neben der unter Einbeziehung eines aromatisch gebundenen Kohlenstoffs geknüpften Bindung auch andere Bindungen wie Ether-, Hemiacetal-, und/oder Acetal-Bindungen enthalten sein. Zur Erhöhung der Reaktivität des resultierenden Harzes ist es ausreichend, wenn bereits zwei der HMF-Einheiten unter Einbeziehung eines aromatisch gebundenen Kohlenstoffatoms verknüpft sind. Insbesondere enthalten kohlenstoffverknüpfte HMF-Oligomere mit 2 Einheiten einen vergleichsweise hohen Anteil an freien funktionellen, reaktiven Gruppen pro HMF-Oligomer. Das kohlenstoffverknüpfte HMF-Oligomer kann auch mehrere solcher Kohlenstoff-Kohlenstoff-Verknüpfungen aufweisen.

Ferner können neben den kohlenstoffverknüpften HMF-Oligomeren noch weitere HMF-Oligomere mit Ether-, Hemiacetal- und/oder Acetal-Bindungen enthalten sein. Aufgrund des hohen Anteils an freien funktionellen Gruppen reichen bereits geringe Mengen an kohlenstoffverknüpftem HMF-Oligomer aus, um sehr reaktive Oligomere bereitzustellen. Ebenfalls von der Erfindung umfasst ist, dass das kohlenstoffverknüpfte HMF-Oligomer bis 100 Gew.%, bezogen auf die Gesamtmenge an HMF-Oligpmer, ausmacht.

Nach einer weiteren vorteilhaften Ausgestaltung des Verfahrens wird der Umsetzungsschritt in einer Lösung solange durchgeführt, bis die Lösung eine gewünschte Viskosität erreicht hat oder die Reaktion abgeschlossen ist. Bevorzugt wird der Umsetzungsschritt solange durchgeführt, bis die Lösung eine Viskosität von über 200 mPa.s erreicht hat, besonders bevorzugt bis die Lösung eine Viskosität von über 450 mPa.s erreicht hat.

Nach einer weiteren vorteilhaften Ausgestaltung des Verfahrens enthält das Verfahren mindestens einen weiteren Schritt, der 5-Hydroxymethylfurfural, welches mindestens ein HMF-Oligomer umfasst, für den Umsetzungsschritt bereitstellt.

Bevorzugt enthält der Bereitstellungsschritt, dass man eine mehr oder weniger reine Lösung von HMF-Monomeren und/oder HMF-Oligomeren Bedingungen aussetzt, die zur Bildung von HMF-Oligomeren führen. Die Erfinder haben festgestellt, dass wässrige HMF-Lösungen, die beispielsweise aus kristallinem HMF mit Wasser hergestellt wurden, unter Bildung der HMF-Oligomere altern. Die Menge und das Molekulargewicht der HMF-Oligomere kann hierbei über dem Fachmann geläufige Analysemittel wie HPLC und NMR-Spektroskopie bestimmt werden.

Die Bildung von HMF-Oligomeren unter moderaten Bedingungen, das bedeutet, unter Normaldruck und Raumtemperatur, kann im Bereich von Stunden, Tagen oder Wochen liegen.

Besonders bevorzugt umfassen die Bedingungen, denen die HMF-Lösung ausgesetzt wird, eine Alkalisierung oder Ansäuerung der Lösung. Ebenfalls besonders bevorzugt umfassen die Bedingungen das Erhitzen der Lösung, gegebenenfalls in Kombination mit einer Ansäuerung oder Alkalisierung. Durch Ansäuerung, Alkalisierung und Erhitzen kann der Alterungsprozess beschleunigt werden.

Eine besonders bevorzugte Variante des Bereitstellungsschritts beinhaltet, dass man 5-Hydroxymethylfurfural, welches mindestens ein HMF-Oligomer umfasst, durch Behandlung einer wässrigen Suspension von cellulosehaltiger Biomasse und/oder einer wässrigen Kohlenhydrat-Lösung von mindestens einer Hexose und/oder einer wässrigen 5-Hydroxymethylfurfural-Lösung unter hydrothermalen Bedingungen bereitstellt.

Die Behandlung von Biomasse wie pflanzlichen Rohstoffen, von Kohlenhydraten oder von aus Kohlenhydraten abgeleiteten Verbindungen unter hydrothermalen Bedingungen zur Gewinnung von 5-HMF(-Monomeren) ist bekannt und sieht vor, das Ausgangsmaterial in wässrigem Medium Druck und erhöhter Temperatur auszusetzen. Bei der Behandlung einer wässrigen Suspension von cellulosehaltiger Biomasse und/oder einer wässrigen Kohlenhydrat-Lösung von mindestens einer Hexose und/oder einer wässrigen 5-Hydroxymethylfurfural-Lösung unter hydrothermalen Bedingungen werden HMF-Oligomere gebildet.

Cellulosehaltige Biomasse, die häufig als Abfallprodukt der landwirtschaftlichen Erzeuger anfällt, ist aufgrund Ihres geringen Kostenfaktors besonders bevorzugt. Bevorzugte Hexosen sind Fructose oder Glucose, insbesondere kann es sich um Fructose oder Gemische aus Fructose und Glucose handeln.

Bevorzugte hydrothermale Bedingungen sind Sattdampfdruck und Temperaturen von 150 bis 250°C. Dies hat den Vorteil, dass die Bildung von HMF-Oligomeren in Abhängigkeit des Ausgangsmaterials innerhalb von Minuten bis zu wenigen Stunden abgeschlossen ist.

Bevorzugt wird der Bereitstellungsschritt so lange durchgeführt, bis die gewünschte Menge an HMF-Oligomer erreicht ist oder die Reaktion abgeschlossen ist.

Bevorzugt liegt das HMF, welches mindestens ein HMF-Oligomer umfasst, am Ende des Bereitstellungsschritts in wässriger Lösung vor. Weiter bevorzugt ist es, den Gehalt, die Größe und/oder die Konzentration des Oligomers oder der Oligomere zu beeinflussen. Besonders bevorzugt wird der Gehalt des Oligomers oder der Oligomere beeinflusst, indem die im Beschaffungsschritt erhaltene Lösung einer Filtration an mindestens einem Filtriermittel unterzogen wird. Die Behandlung einer wässrigen HMF-Lösung nach einer hydrothermalen Karbonisierung wird beispielsweise in der DE 10 2014 112 240 A1 beschrieben.

Im folgenden wird wird ein thermisch härtbares Harz beschrieben, das durch das oben beschriebene Verfahren erhältlich ist.

Bevorzugt umfasst das thermisch härtbare Harz wenigstens ein durch Polykondensation Aminoplastbildnern mit 5-Hydroxymethylfurfural (HMF) erhaltenes Polymer, wobei das Polymer ein Polykondensationsprodukt einer phenolischen Verbindung und/oder einem Aminoplastbildner mit einem HMF-Oligomer ist.

Unter dem Begriff Polymer werden Produkte der Polykondensation verstanden. Die Polymere sind üblicherweise wasserunlöslich.

Hinsichtlich bevorzugter Aminoplastbildner kann auf die oben gemachten Angaben verwiesen werden.

Der Feststoffgehalt des Harzes kann über einen breiten Bereich variiert werden. Der Feststoffgehalt beträgt wenigstens 40 Gew.%. Bevorzugt liegt der Feststoffgehalt des Harzes im Bereich von 45 bis 80 Gew.%, besonders bevorzugt zwischen 50 und 70 Gew.%.

Bevorzugt beträgt das molare Verhältnis der HMF-Gesamtmenge zu der Gesamtmenge an Aminoplastbildner im Harz 0,20:1 bis 3:1 bevorzugt beträgt das molare Verhältnis 0,3:1 bis 1:1, besonders bevorzugt beträgt das molare Verhältnis 0,45:1 bis 0,70:1.

Nach einer bevorzugten Ausgestaltung des Harzes ist das Polymer ein Polykondensationsprodukt eines Aminoplastbildners mit einem kohlenstoffverknüpften HMF-Oligomer, das zumindest eine erste HMF-Einheit enthält, die mit einem aromatisch gebundenen Kohlenstoff einer zweiten HMF-Einheit verknüpft ist.

Hinsichtlich der kohlenstoffverknüpften HMF-Oligomere kann auf die oben gemachten Angaben verwiesen werden.

Im folgenden ist die Verwendung des Harzes für die Herstellung eines Holzverbundwekstoffs beschrieben.

Die Harze eignen sich insbesondere zur Herstellung von Verbundwerkstoffen aus lignocellulosehaltigem Material wie Holzspänen, Holzfasern oder Holzchips. Die Herstellung der Holzverbundwerkstoffe erfolgt nach den auf diesem Fachgebiet allgemein bekannten Methoden. Die Holzverbundwerkstoffe werden erhalten, indem man das lignocellulosehaltige Material mit den Harzen in Kontakt bringt und die Harze anschließend aushärtet, was mit einer Vernetzung einhergeht.

Die Aushärtung wird bevorzugt vorgenommen, indem man das mit dem lignocellulosehaltigen Material versehene Harz verpresst. Üblicherweise kommen Drücke von 1 bis 30 mPa zum Einsatz. In der Regel erfolgt die Verpressung bei einer Temperatur im Bereich von 120°C bis 250°C. Aufgrund der Reaktivität der Harze genügen bereits wenige Minuten zum Erhalt von Holzwerkstoffen mit guten mechanischen Eigenschaften. Bevorzugt liegt die Pressdauer im Bereich von 3 bis 10 Minuten, besonders bevorzugt liegt die Pressdauer im Bereich von 5 bis 8 Minuten. Eine kurze Pressdauer ist sowohl aus produktionstechnischen als auch wirtschaftlichen Gesichtspunkten vorteilhaft. Gewünschtenfalls kann das Vernetungsvermögen der Harze dadurch erhöht werden, dass man den Harzen einen Härter zusetzt. Bevorzugt liegt die Menge des Härters im Bereich von 2 Gew.% bis 7 Gew.%, bezogen auf die Harzmenge, besonders bevorzugt im Bereich von 2 Gew.% bis 5,5 Gew.%, bezogen auf die Harzmenge, ganz besonders bevorzugt im Bereich von 2 Gew.% bis 3 Gew.%, bezogen auf die Harzmenge. Härter können insbesondere Hexamethylentetramin oder Ammoniumsalze wie Ammoniumsulfat sein. Die Reaktivität der HMF-Oligomere ist jedoch so hoch, dass lediglich sehr geringe Mengen an Härter eingesetzt werden müssen, um Harze mit einem hohen Vernetzungsvermögen zu erhalten. Es kann auch vollkommen auf einen Härter verzichtet werden.

Die erhaltenen Holzverbundwerkstoffe können schließlich zur Stabilisierung in einem Trockenschrank oder Holztrockner bei Temperaturen im Bereich von 10°C bis 100°C unter kontrollierter Atmosphäre nachbehandelt werden. Eine solche kann beispielsweise eine relative Luftfeuchte im Bereich von 40% bis 70% umfassen.

Ein Vorteil in der Herstellung eines Holzverbundwerkstoffs mit thermisch härtbaren Harzen ist, dass die Holzverbundwerkstoffe formaldehyd-frei und auf Basis natürlicher, erneuerbarer Rohstoffe hergestellt werden können und dabei eine sehr gute Beständigkeit gegen Feuchtigkeit, insbesondere Wasserdampf, aufweisen. Ein weiterer Vorteil ist, dass aufgrund der Reaktivität der Harze kurze Presszeiten im Minutenbereich ausreichen, um einen Holzverbundwerkstoff mit sehr guten mechanischen Eigenschaften zu erhalten.

Die Harze eignen sich insbesondere zur Verwendung für die Herstellung von Sperrholz-, Holzfaserverbund-, Span- oder Mehrschichtplatten mit einer inneren Bindungsstärke (IB) von $\geq$ 0,35 N/mm$^2$.

Ein weiterer Vorteil von Produkten auf der Basis der Harze besteht darin, dass diese die Anforderungen an den Mindeststandart gemäß der europäischen Norm NEN EN 319 übertreffen, wie dies auch den nachfolgenden Beispielen entnommen werden kann.

Die nachfolgenden Beispiele dienen lediglich der Erläuterung der Erfindung und sollen diese in keiner Weise beschränken.

Beispiel 1:

Herstellung von Spanplatten

a) Bereitstellung einer HMF-Lösung mit HMF-Oligomeren:
Eine 16%tige wässrige Lösung aus kristallinem HMF wurde gleichzeitig konzentriert und gealtert, indem sie in einem Rotationsverdampfer bei 45°C und 30 mbar eingeengt wurde, bis die Konzentration an HMF 50 Gew.%, bezogen auf die Lösung betrug.

b) Herstellung und Vergleich der Eigenschaften von Harnstoff-HMF-Harzen:
Es wurden zwei Harze hergestellt, die sich in ihrem molaren Verhältnis von Harnstoff zu HMF unterschieden. Ein erstes Harz wurde mit einem Verhältnis von 1:0,5 Harnstoff zu HMF, im Folgenden mit UH(1:0,5) bezeichnet, hergestellt. Ein zweites Harz wurde mit einem Verhältnis von 1:0,25 Harnstoff zu HMF, im Folgenden mit UH(1:0,25) bezeichnet, hergestellt. Der Feststoffgehalt der Harze lag bei etwa 58%. Für beide Harze wurden 400 ml der 50%itigen HMF-Lösung aus a) verwendet. Bei beiden Harzen wurde der Harnstoff mit HMF bei einem pH-Wert von 2 zunächst für 2,5 Stunden und einer Temperatur von 90°C und anschließend mehrere Stunden bei einer Temperatur von 20°C umgesetzt. Die Änderung der Viskosität der Harze wurde dabei beobachtet.

Tabelle 1: Viskositätszunahme in Abhängigkeit der Zeit

| Zeit [Stunden] | Viskosität [mPa.s] | |
| --- | --- | --- |
| | UH(1:0,5) | UH(1:0,25) |
| 4 | 470 | - |
| 24 | 1275 | 58 |
| 48 | - | 60 |
| 120 | - | 65 |
| 144 | - | 65 |
| 168 | - | 65 |

c) Verpressen von Holzspänen zu Spanplatten:
Für das anschließende Verpressen von Holzspänen wurde das Harz UH(1:0,5) mit einer Viskosität von 1275 mPa.sund das Harz UH(1:0,25) mit einer Viskosität von 65 mPa.s verwendet. Die Harze wurden jeweils mit den Holzspänen und mit Hexamethylentetramin vermischt und dann bei 220°C gepresst zur Herstellung von 250 mm x 250 mm x 16 mm großen Platten. Die Beladung des trockenen Holzes betrug 10 Gew.% Harzfeststoff, bezogen auf die Holzmenge. Um den Einfluss verschiedener Presszeiten und verschiedener Mengen an Härter zu testen, wurden mehrere Platten unter Variation der Zeiten und der Mengen an Hexamethylentetramin hergestellt. Die mit den beiden Harzen UH(1:0,5) und UH(1:0,25) für die Spanplatten erhaltenen Werte sind in der Tabelle 2 angegeben.

Zum Vergleich wurde ein drittes Harz, UH45(1:0,5), hergestellt, indem die Komponenten des Harzes UH(1:0,5) bei einer tieferen Temperatur von 45°C umgesetzt wurden. Das Harz UH45(1:0,5) wurde ebenfalls für das Verpressen von Holzspänen zu 250 mm x 250 mm x 16 mm Spanplatten verwendet. Die für diese Spanplatten erhaltenen Werte sind ebenfalls in der Tabelle 2 angegeben.

Der Vergleich der mit den Harzen hergestellten Platten ergab, dass grundsätzlich bei einer längeren Pressdauer bessere Werte für die Innere Festigkeit erhalten werden.

Mit einem Molverhältnis von Harnstoff zu HMF von 1:0,5 erreichen die Platten 3 und 4 die hohen Werte von 52 N/mm$^2$ und 55 N/mm$^2$. Diese Werte sind auf eine Pressdauer von 7,5 min in Verbindung mit einer hohen Herstellungstemperatur der Harze von 90°C zurückzuführen.

Die Platten 1 und 2 sowie 5 und 6 verdeutlichen den Einfluss der Temperatur bei der Herstellung der Harze.

Selbst Platten, welche mit geringeren Mengen an HMF hergestellt wurden, liefern ein befriedigendes Ergebnis, wenn die Pressdauer erhöht wird, wie die Platten 7 bis 10 zeigen.

Hinsichtlich dem Härter hat sich gezeigt, dass sich unterschiedliche Härtermengen weniger stark bis nicht bemerkbar machen, sofern die Platten mit einem gewissen Anteil an HMF hergestellt wurden, wie die Platten 3 bis 6 zeigen. Die Platten 7 und 10 mit niedrigeren Anteilen an HMF werden deutlich stärker von der Härtermenge beeinflusst. Die Werte verdeutlichen, dass infolge der positiven Eigenschaften der verwendeten HMF-Oligomere die benötigten Härtermengen drastisch reduziert werden können, wobei Produkte mit identischer bzw. vergleichbarer Inneren Bindungsstärke erhalten werden können.

Innere Bindungsstärke (IB) gemäß NF EN 319 (AFNOR 1993):

Die innere Bindungsstärke in [N/mm²] wird durch die folgende Formel ausgedrückt:

$$IB = \frac{Fmax}{axb},$$

wobei *Fmax* die Bruchkraft, a die Breite und b die Länge der Platte ist.

Die NF EN 319 (AFNOR 1993) sieht für Span- und Faserplatten mit einer Stärke im Bereich von 13 mm bis 20 mm eine Innere Bindungsstärke von ≤0,35 N/mm² vor.

Die Platten zur Untersuchung der Inneren Bindungsstärke wurden durch Zerschneiden aus den unter c) hergestellten Platten gewonnen. Ihre Größe betrug 50 mm x 50 mm. Vor dem Zerschneiden wurden die Platten in einem Trockner bei 20°C und einer relativen Luftfeuchtigkeit von 65% stabilisiert.

Die Platten wurden mit Hilfe eines Heißschmelzklebstoffs auf einer Unterlage befestigt. Die Bestimmung der Inneren Bindungsstärke fand gemäß NF EN 319 (AFNOR 1993) maschinell senkrecht zur Ebene der Platten statt.

Tabelle 2: Parameter der Spanplattenherstellung und Eigenschaften der Spanplatten

| Platte | Harz | Synthesetemperatur [°C] | Viskosität [mPa.s] | Molverhältnis Harnstoff : HMF | Presstemperatur [°C] | Pressdauer [min] | Härter [%] | Dichte [kg/m$^3$] | Innere Bindungsstärke (IB) [N/mm$^2$] |
|---|---|---|---|---|---|---|---|---|---|
| 1 | UH45 (1:0,5) | 45 | 382 | 1:0.5 | 220 | 5.5 | 5 | 733 | 0.27 |
| 2 | UH45 (1:0,5) | 45 | 382 | 1:0.5 | 220 | 5.5 | 2.5 | 729 | 0.21 |
| 3 | UH(1:0,5) | 90 | 1275 | 1:0.5 | 220 | 7.5 | 5 | 717 | 0.55 |
| 4 | UH(1:0,5) | 90 | 1275 | 1:0.5 | 220 | 7.5 | 2.5 | 718 | 0.52 |
| 5 | UH(1:0,5) | 90 | 1275 | 1:0.5 | 220 | 5.5 | 5 | 715 | 0.43 |
| 6 | UH(1:0,5) | 90 | 1275 | 1:0.5 | 220 | 5.5 | 2.5 | 718 | 0.43 |
| 7 | UH(1:0,25) | 90 | 65 | 1:0.25 | 220 | 7.5 | 5 | 714 | 0.44 |
| 8 | UH(1:0,25) | 90 | 65 | 1:0.25 | 220 | 6.5 | 5 | 715 | 0.39 |
| 9 | UH(1:0,25) | 90 | 65 | 1:0.25 | 220 | 5.5 | 5 | 712 | 0.31 |
| 10 | UH(1:0,25) | 90 | 65 | 1:0.25 | 220 | 7.5 | 2.5 | 713 | 0.36 |

Weitere Vorteile und vorteilhafte Ausgestaltungen sind den Ansprüchen und der nachfolgenden Zeichnung zu entnehmen.

Es zeigen

Figur 1 einen vorgeschlagenen Mechanismus der Kohlenstoff-Kohlenstoff-Bindungsbildung unter sauren Bedingungen anhand der Dimerisierung zweier HMF-Moleküle, sowie

Figur 2 einen vorgeschlagenen Mechanismus der Kohlenstoff-Kohlenstoff-Bindungsbildung unter basischen Bedingungen anhand der Dimerisierung zweier HMF-Moleküle.

Sämtliche Merkmale der Erfindung können sowohl einzeln als auch in beliebiger Kombination miteinander erfindungswesentlich sein.

**Patentansprüche**

1. Verfahren zur Herstellung von thermisch härtbaren Harzen enthaltend den Schritt der Umsetzung eines Aminoplastbildners mit 5-Hydroxymethylfurfural (HMF) unter zur Bildung von Polykondensationsprodukten führenden Bedingungen, **dadurch gekennzeichnet, dass** das HMF mindestens ein HMF-Oligomer umfasst und dass der Anteil an HMF-Oligomer 0,05 Gew.% bis zu 100 Gew.% beträgt, bezogen auf die Gesamtmenge an eingesetztem HMF.

2. Verfahren nach Anspruch 1, **dadurch gekennzeichnet, dass** der Umsetzungsschritt bei Temperaturen im Bereich von 20°C bis 140°C durchgeführt wird.

3. Verfahren nach Anspruch 1 oder 2, **dadurch gekennzeichnet, dass** das molare Verhältnis der eingesetzten HMF-Menge zu der Gesamtmenge an Aminoplastbildner 0,20:1 bis 3:1 beträgt.

4. Verfahren nach einem der vorhergehenden Ansprüche, **dadurch gekennzeichnet, dass** der Anteil an HMF-Oligomer, bezogen auf die Gesamtmenge an eingesetztem HMF, 0,05 Gew.% bis 10 Gew.% beträgt.

5. Verfahren nach einem der vorhergehenden Ansprüche, **dadurch gekennzeichnet, dass** das HMF-Oligomer 2 bis 20 Einheiten aufweist.

6. Verfahren nach einem der vorhergehenden Ansprüche, **dadurch gekennzeichnet, dass** der Aminoplastbildner Harnstoff, Melamin, substituiertes Melamin, substituierter Harnstoff, Acetylendiharnstoff, Guanidin, Thioharnstoff, Thioharnstoffderivat, Diaminoalkan, Diamidoalkan oder ein Gemisch von mindestens zwei dieser Aminoplastbildner ist.

7. Verfahren nach einem der vorhergehenden Ansprüche, **dadurch gekennzeichnet, dass** das HMF-Oligomer ein kohlenstoffverknüpftes HMF-Oligomer ist.

8. Verfahren nach einem der vorhergehenden Ansprüche, **dadurch gekennzeichnet, dass** der Umsetzungsschritt in einer Lösung solange durchgeführt wird, bis die Lösung eine gewünschte Viskosität erreicht hat oder die Reaktion abgeschlossen ist.

9. Verfahren nach einem der vorhergehenden Ansprüche, **dadurch gekennzeichnet, dass** das Verfahren mindestens einen weiteren Schritt enthält, der 5-Hydroxymethylfurfural, welches mindestens ein HMF-Oligomer umfasst, für den Umsetzungsschritt bereitstellt.

10. Verfahren nach Anspruch 9, **dadurch gekennzeichnet, dass** das 5-Hydroxymethylfurfural durch Behandlung einer wässrigen Suspension von cellulosehaltiger Biomasse und/oder einer wässrigen Kohlenhydrat-Lösung von mindestens einer Hexose und/oder einer wässrigen 5-Hydroxymethylfurfural-Lösung unter hydrothermalen Bedingungen bereitgestellt wird.

**Claims**

1. Method for producing thermally curable resins, containing the step of reacting an aminoplast former with 5-hydroxymethylfurfural (HMF) under conditions leading to the formation of polycondensation products, **characterized in that** the HMF comprises at least one HMF oligomer and **in that** the proportion of HMF oligomer is 0.05 wt.% to 100 wt.%, based on the total amount of HMF used.

2. Method according to claim 1, **characterized in that** the reaction step is carried out at temperatures in the range of 20°C to 140°C.

3. Method according to either claim 1 or claim 2, **characterized in that** the molar ratio of the amount of HMF used to the total amount of aminoplast former is 0.20:1 to 3:1.

4. Method according to any of the preceding claims, **characterized in that** the proportion of HMF oligomer, based on the total amount of HMF used, is 0.05 wt.% to 10 wt.%.

5. Method according to any of the preceding claims, **characterized in that** the HMF oligomer has 2 to 20 units.

6. Method according to any of the preceding claims, **characterized in that** the aminoplast former is urea, melamine, substituted melamine, substituted urea, acetylenediurea, guanidine, thiourea, thiourea derivative, diaminoalkane, diamidoalkane or a mixture of at least two of these aminoplast formers.

7. Method according to any of the preceding claims, **characterized in that** the HMF oligomer is a carbon-linked HMF oligomer.

8. Method according to any of the preceding claims, **characterized in that** the reaction step is carried out in a solution until the solution has reached a desired viscosity or the reaction is complete.

9. Method according to any of the preceding claims, **characterized in that** the method comprises at least one further step of providing 5-hydroxymethylfurfural, which comprises at least one HMF oligomer, for the reaction step.

10. Method according to claim 9, **characterized in that** the 5-hydroxymethylfurfural is provided by treating an aqueous suspension of cellulosic biomass and/or an aqueous carbohydrate solution of at least one hexose and/or an aqueous 5-hydroxymethylfurfural solution under hydrothermal conditions.


**Revendications**

1. Procédé de fabrication de résines thermodurcissables contenant l'étape de réaction d'un formateur d'aminoplastes comportant du 5-hydroxyméthylfurfural (HMF) dans des conditions conduisant à la formation de produits de polycondensation, **caractérisé en ce que** le HMF comprend au moins un oligomère de HMF et **en ce que** la proportion d'oligomère de HMF est de 0,05 % en poids jusqu'à 100 % en poids, par rapport à la quantité totale de HMF utilisé.

2. Procédé selon la revendication 1, **caractérisé en ce que** l'étape de réaction est mise en oeuvre à des températures dans une plage allant de 20 °C à 140 °C.

3. Procédé selon la revendication 1 ou 2, **caractérisé en ce que** le rapport molaire de la quantité de HMF utilisé à la quantité totale de formateur d'aminoplastes est de 0,20:1 à 3:1.

4. Procédé selon l'une des revendications précédentes, **caractérisé en ce que** la proportion d'oligomère de HMF est de 0,05 % en poids à 10 % en poids par rapport à la quantité totale de HMF utilisé.

5. Procédé selon l'une des revendications précédentes, **caractérisé en ce que** l'oligomère de HMF présente 2 à 20 motifs.

6. Procédé selon l'une des revendications précédentes, **caractérisé en ce que** le formateur d'aminoplastes est l'urée, la mélamine, la mélamine substituée, l'urée substituée, l'acétylènediurée, la guanidine, la thiourée, un dérivé de thiourée, le diaminoalcane, le diamidoalcane ou un mélange d'au moins deux desdits formateurs d'aminoplastes.

7. Procédé selon l'une des revendications précédentes, **caractérisé en ce que** l'oligomère de HMF est un oligomère de HMF lié au carbone.

**8.** Procédé selon l'une des revendications précédentes, **caractérisé en ce que** l'étape de réaction est mise en oeuvre dans une solution jusqu'à ce que la solution ait atteint une viscosité souhaitée ou que la réaction soit terminée.

**9.** Procédé selon l'une des revendications précédentes, **caractérisé en ce que** le procédé contient au moins une étape supplémentaire, laquelle fournit le 5-hydroxyméthylfurfural comprenant au moins un oligomère de HMF pour l'étape de réaction.

**10.** Procédé selon la revendication 9, **caractérisé en ce que** le 5-hydroxyméthylfurfural est fourni par traitement d'une suspension aqueuse de biomasse cellulosique et/ou d'une solution d'hydrate de carbone aqueuse d'au moins un hexose et/ou d'une solution de 5-hydroxyméthylfurfural aqueuse dans des conditions hydrothermales.

Fig. 1

Fig. 2

## IN DER BESCHREIBUNG AUFGEFÜHRTE DOKUMENTE

**In der Beschreibung aufgeführte Patentdokumente**

- US 4524164 A

- DE 102014112240 A1